# EUROPEAN PATENT SPECIFICATION

(11) **EP 1 356 646 B1**
(45) Date of publication and mention of the grant of the patent: **22.08.2007**
(21) Application number: 02710931.3
(22) Date of filing: 01.02.2002
(51) Int. Cl.: H04L 12/58

(54) **Method system and server for sending and receiving e-mails with different addresses**
Verfahren, System und Server zum Senden und Empfangen von E-mails mit verschiedenen Adressen
Procédé, système et serveur pour l'envoi et la réception de courriels avec des adresses différentes

(30) Priority: 01.02.2001 FI 20010194
(43) Date of publication of application: 29.10.2003
(73) Proprietor: Emidex Oy, 02150 Espoo (FI)
(72) Inventor: NUORTILA, Olli, FIN-02170 Espoo (FI)
(74) Representative: Savela, Antti-Jussi Tapani
(86) International application number: PCT/FI2002/000078
(87) International publication number: WO 2002/062027

(56) References cited:
- EP-A2- 0 926 612
- WO-A1-00/77987
- WO-A1-99/05799
- US-A- 5 987 508
- KAHARI A.: '.forward help needed' INTERNET NEWSGROUP MESSAGE, [Online] 05 September 2000, comp.unix.misc

## Description

### Field of the Invention

The present invention generally relates to separation of e-mail communication with an e-mail address from e-mail communication with other e-mail address in an e-mail client program. Especially the invention relates to separation of private e-mail communication from work related e-mail communication.

### Background Art

Electronic mail (e-mail) has become an important means of communication between organizations and private persons. E-mail is widely used for carrying out work related tasks as well as for private communication. The number of employees having access to the Internet at work place is increasing rapidly and many employees have a personal e-mail address in the employer's address domain. The most widely used address format in the Internet is: firstname.familyname@organization.suffix, where the suffix may be a country code, commercial organization code (com or net), a public organization code (org), or a combination thereof.

From an employer's point of view an employee's personal office e-mail address in the employers' address domain is intended solely for carrying out work related tasks. However, employees often use their personal office e-mail address also for private communication. Personal office e-mail addresses are used for e-mail communication as well as for communication at various discussion forums in the Internet. Using the same e-mail address for both private communication and work related tasks is causing problems. Rights and obligations concerning the employees' private e-mail messages in the employer's e-mail system (whether sent from or received to such system) are still unclear. On the one hand, employees' private e-mails may get privacy protection that is similar to that of letter correspondence, whereupon employers would have no rights in any circumstances to read such private e-mails. On the other hand, it has been stated that since the employer provides an employee with a personal e-mail address and access to the employer's e-mail system solely carrying out work related tasks the employee may not assume privacy of such e-mail correspondence and the employer is free to read all messages saved in his e-mail system.

Hence, a problem is how to put into practice the privacy protection of the employees' private e-mail messages in the employer's e-mail system. Since private and work related messages sent from as well as received to a particular employee's personal e-mail address are in the same folders, it is usually impossible to make distinction between the private and the work related messages without opening the message. One cannot conclude with any certainty from the subject-field or from the sender or receiver information of an e-mail message whether the message is a private message or a work related message. It may also be impossible to know whether a message sent by an employee from his personal office e-mail address is meant to be a private message or a message sent for and on behalf of the employer.

In addition to the privacy protection of employees' private e-mail messages, there are a number of other reasons why it would be helpful to be able to keep certain e-mail correspondence in an office e-mail system separate from other more general e-mail correspondence. For example, the amount of e-mails today in some work environments is excessive and may make it difficult for the recipient to find the messages requiring more or different kind of attention than the bulk of the messages. Certain correspondence may require exceptional confidentiality or one may want to keep correspondence in different functions or responsibilities separate from each other.

WO 9905799 describes a method and a system for keeping costs of personal communication separate from costs of business communication. A special type designation is provided in a bit field of a message to be sent. A message management centre receives the message and, after determining whether the message is personal of work-related, bills the cost of transmitting the message to the sender in case of the personal message. However, in this method the personal messages are not kept separate from the work-related ones.

Address translation is used in US-5987508 that describes a method in which a sender addresses an e-mail message to a recipient to an alias e-mail address. Said alias address consists of the recipient's telephone number as the recipient name at a well-known domain name server. The message is sent to a translation server at the well-known domain name, where the alias telephone number-recipient name is translated to the actual e-mail address of the recipient. The message is then forwarded to that recipient at that actual e-mail address. The method is intended to avoid the difficulty with prior-art e-mail messaging where the sender must know the actual e-mail address of the recipient in order to transmit a message. The actual address may be difficult to remember whereas the sender probably remembers the recipient's telephone number. This method fails to teach how personal messages are kept separate from work-related ones.

It is also known in the art to use a so-called mail-delivery agent (MDA). The MDA is software that accepts incoming e-mail messages and distributes them to recipients' individual mailboxes if the destination account is on the local machine, or forwards to an SMTP server if the destination is on a remote server. However, utilizing the MDA requires a certain skill from a user because the user must have basic knowledge about the UNIX;.the MDA is intended mainly to UNIX machines.

It is known in the art to configure a mail agent to forward work related messages to a private e-mail account (see Kahari : ". forward help needed", 5-9-200, message in comp.unix.misc newsgroup, available at http://groups.google.com/group/comp.unix.misc/tree/browse_frm/ month/2000-09)

### Summary of the invention

An objective of the present invention is to provide a method for keeping particular e-mail messages sent from or received to an e-mail client program in an e-mail system separate from other messages in the same e-mail system; e.g._for keeping employees' private e-mail messages separate from the work related messages.

The objective is achieved with methods, a system and an e-mail server as defined in the independent claims.

The invention is based upon interaction between an e-mail client program in the user's desktop computer and a remote server computer ("private-address-server") in the Internet. Hereafter said server computer is called "mediating server". User's private e-mail address and personal office e-mail address are saved in the mediating server. The client program is programmed to send all messages that are marked private to the mediating server, by replacing the recipient's address, which is removed to another field of the message, with the address of the mediating server. To the user the message seems to be sent to the actual recipient. The mediating server receives the message, replaces the sender's address with the user's private e-mail address, restores the original recipient's address from the other field to the recipient field and sends the message further to the original recipient(s). To the recipient(s) the message appears to have been sent from the sender's private e-mail address.

The user of the method directs all private e-mail to be sent to him to his private e-mail address. When the mediating server receives a message addressed to a user it marks the message private and reroutes it further to an e-mail address or addresses assigned by the user from time to time (typically the user's personal office e-mail address).

The user's e-mail client program has been set to transfer all private messages, i.e. all messages from the mediating server, or sent through it (or otherwise marked as private) to a separate private e-mail folder, in order to keep them separate from the user's work related e-mail messages.

The method makes it possible to keep separate from each other the e-mail messages "owned" by the employee and those "owned" by the employer in the employer's e-mail system , and in so doing removes the risk of unintentional violation of privacy of the employee's private e-mail messages. The method is so easy to use that the employers can reasonably expect the employees to use it. No modifications are required to the employer's e-mail server or to any commercial e-mail servers. The employee may continue to use his private e-mail address even if he is taking a job with another employer, or when he is retiring. The user does not have to change his private e-mail address even if he is starting to use the services of another commercial e-mail service provider.

As the method may be used for receiving or sending messages under another e-mail address than the address assigned in the relevant e-mail service, and for keeping such messages separate from e-mail messages sent or received under the e-mail system address, it is possible for a user of the invented method to sort automatically personal e-mail correspondence by using different addresses for different category of e-mails in one e-mail client program.

### Brief Description of the Drawings

The invention is described in more detail in the accompanying drawings in which:
Figure 1 illustrates a system based on the invention; and

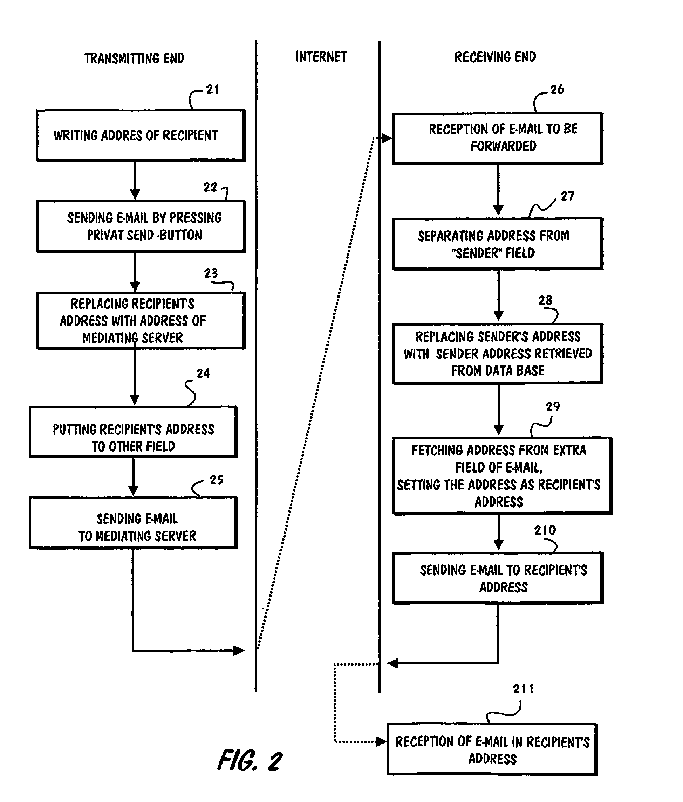

Figure 2 is a flowchart of private message transmission

### Detailed Description of the Invention

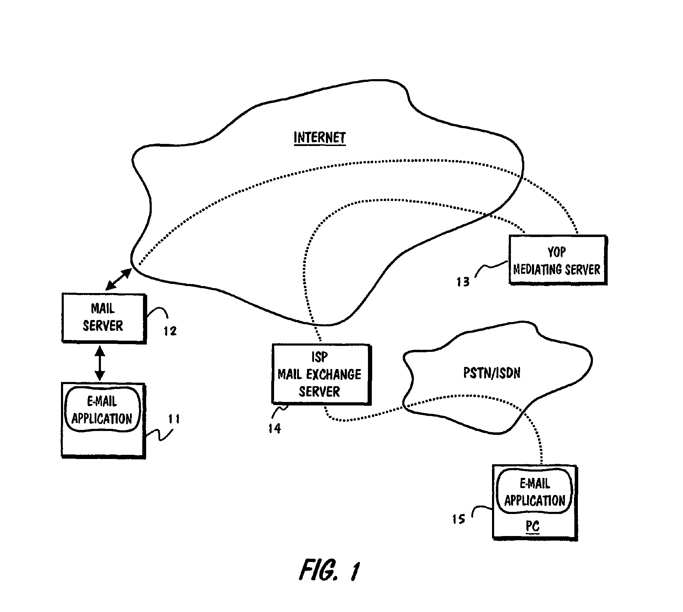

FIG. **1** shows the necessary elements for the realization of the method. In this example an employee has access to the Internet through desktop computer **11** and employer's e-mail server **12.** The server is continuously connected to the Internet and e-mails are routed to the recipient immediately. Another user, employee or private person, has access to the Internet through PSTN or ISDN connection by dialing the telephone number to an internet service provider **14.** The internet service provider saves e-mails addressed to the recipient's account to the internet service provider's e-mail server's hard disk, and e-mails can be read by taking a dial-up connection to the internet service provider. These two methods dedicated line and dial-up connection are the most common ways of using e-mail.

The elements to be added to the existing systems described above in the invented method are a plug-in extension to the user's e-mail client program and a relay server connected to the Internet **13** (mediating server). A plug-in function has been added to the e-mail client program of the user's desktop computer **11** to carry out the address changes in accordance with the invention. In the address change the recipient's address (or recipients' addresses) is replaced with the address of the mediating server 13 and the address, or addresses, originally placed in the recipient field(s) is/are placed to another field(s) of the e-mail message. Such other field(s) may be any field(s) other than address field, which complies with the relevant internet message standards. There may be more than one recipient address fields; the main recipient address field (TO:), the first additional recipient address field (CC:) and the second additional recipient address field (BCC:). To each recipient address field one can place one or more e-mail addresses. Address changes are described in more detail hereinafter. The client program add-on functions are run automatically. When a user chooses to send private message he/she only has to elect to press a new push button ("send private mail"), created to the relevant e-mail client program by the plug-in program, instead of the ordinary send-bufton, It is also possible to make a program extension which detects if the user selects the recipient's address from a private address list and asks the user to confirm that the message shall be sent as a private message. In practice it will be feasible to create a separate private message form, the selection of which automatically runs the address chance for routing the message to the mediating server.

The private message is transmitted quite normally through the employer's e-mail server **12** to the Internet where it finds its way to its target address, i.e. the mediating server **13,** hereafter as the YOP-server. This server transmits the message onwards after is has YOP-server remove its own address from the recipient field and replaces it with the original recipient address(es), placed to the recipient field(s) by the user, which original address(es) the server now fetches from the other field(s). In addition to that, before sending the message onwards, YOP-server replaces the sender's address with the employee's e-mail address in the YOP-server domain. Thus, the recipient shall not see that the message was originally sent from the employee's office address. To the recipient the message appears to be sent from the employee's YOP-server address.

The method is described in more detail in Drawing 2. Let's assume that a company has a domain address 'company.com' and an employee of the company has an office e-mail address: myname@company.com. The employee wants to communicate privately with a person whose name is Bertta. The private e-mail address of Bertta is: bertta@isp-provider.com. The employee's private e-mail address in YOP-server is: myname@YOP.net. When sending private e-mail from his desktop computer **11** the employee writes or places to the recipient field of his e-mail client program quite normally bertta@isp-provider.com., phase **21**. To the sender field of the message the e-mail client program adds automatically the employee's e-mail address: myname@company.com. The sender and recipient fields of the message are as set forth in table 1.

**Table 1**

| | |
|---|---|
| Recipient: (TO:) | Bertta@isp-provider.com |
| Sender: (FROM:) | myname@company.com |

Instead of the pressing now the ordinary send-button the employee presses the button created by the plug-in program, phase **22**. The button may be market as "private send", "send as private" or in any other clearly distinctive manner. Such button can be easily added e.g. to Microsoft Outlook^{™} e-mail program with Microsoft Visual Basic© programming language.

As a response to the pressing of the button the plug-in program replaces the recipient's address in the message's recipient field with YOP-server's address, phase **23.** Further, the plug-in program creates to the message an additional field, to which field it inserts the original recipient's address, phase **24.** The new field must be in accordance with the applicable internet standard in order not to cause any problems in the intermediately e-mail servers. Other alternative would be to add the original recipient address to the message field, or to any other field where it doesn't effect the transmission of the message. The fields of the message modified by the plug-in program would be now as set forth in table 2.

**Table 2**

| | |
|---|---|
| Recipient: (TO:) | YOP@YOP.net |
| Sender: (FROM:) | myname@company.com |
| Additional field: | Bertta@isp-provider.com |

Thereafter the message is transmitted in an ordinary way and it is routed to YOP-server, phase **25.** Finally the plug-in program may automatically move the message to the user's private folder, if this feature is chosen. All phases 23-25 take place automatically.

The message is now transmitted to its target address, i.e. YOP-server receives the message, phase **26.** YOP-server **13**, Drawing 1, has in its database a two-way description from the user's office e-mail address to the user's private e-mail address which is maintained in the YOP-server. In this example the description is myname@company.com <-> myname@YOP.net. YOP-server now verifies from the sender field the work e-mail address of the sender, phase **27** and looks from the database the private e-mail address which the user has chosen for his private e-mail correspondence, phase **28**. For this purpose one can use e.g. properly configured SendMail program. YOP-server replaces the employee's office address in the sender field (FROM:) with his private e-mail address found from the database.

Simultaneously YOP-server restores the original recipient address, removed by the plug-in program to an additional field, to the recipient field, phase **29.** This e-mail address, or addresses, was originally placed by the employee in his e-mail client program to the recipient field. Thereafter YOP-server re-transmits the message to its target address(es), phase **210.** The address fields of the message are now as set forth in table **3.**

**Table 3**

| | |
|---|---|
| Recipient: (TO:) | Bertta@isp-provider.com |
| Sender: (FROM:) | myname@YOP.net |

As one can see from the above table when the recipient receives the message he sees it to be sent from the sender's private address at YOP-server.

In the following the sequence of events is explained when a private e-mail message is sent to the employee. When the recipient replies to the employee's private message, or otherwise sends a private e-mail message to the employee, he places employee's private address, maintained in YOP-server to the recipient field and his own e-mail address to the sender field. When applying the addresses in the above example the address fields of the message are as shown in table 4.

**Table 4**

| | |
|---|---|
| Recipient: (TO:) | myname@YOP.net |
| Sender: (FROM:) | Bertta@isp-provider.com |

The message is received by YOP-server. By comparing the recipient address to its database YOP-server identifies that the recipient is a user of the invented method in YOP-server. YOP-server then looks for the recipient's corresponding office e-mail address in its database (or any other e-mail address or addresses which the user may have been given to YOP-server from time to time), and replaces the address in the recipient field (TO:) with this e-mail address. The address of the sender is then removed to an additional (or another) field. The address of YOP-server is automatically placed to the sender (FROM:) field when the message is retransmitted to the recipient(s). The address fields of the message are now as set forth in table 5.

**Table 5**

| | |
|---|---|
| Recipient: (TO:) | myname@company.com |
| Sender: (FROM:) | YOP@YOP.net |
| Additional field: | Bertta@isp-provider.com |

Thereafter YOP-server sends the e-mail to the address set fort in the above table and the e-mail is routed to the employee's desktop computer e-mail client program. The plug-in program in the employee's e-mail client program verifies the sender addresses and when the sender is YOP-server the program fetches the address of the original sender from the additional (or other) field of the e-mail message and places it to the sender (FROM:) field in replace of the YOP-server address. Thus the address fields shown to the user are as set forth in table 6. Thereafter the program may remove the message to a separate private mail folder if so desired.

**Table 6**

| | |
|---|---|
| Recipient: (TO:) | myname@company.com |
| Sender: (FROM:) | Bertta@isp-provider.com |

For an example Microsoft Office^{™} programming provides running of certain program event when new mail is received.

The described method makes possible to receive e-mail messages to different e-mail addresses within one e-mail system and with one e-mail client program and to keep such messages sent to different addresses separate from each other. Further the method makes possible to send e-mails with different sender addresses within one e-mail system and with one e-mail client program and to keep messages sent with different sender addresses separate from each other. The method makes also possible to send e-mails with one sender address from different e-mail servers.

In the above a variation of the method has been described in which the choice of a message being private is not made until at the actual moment of sending the message, i.e. when the 'send private mail' -button is pressed. It is also possible to have separate writing form for private messages. In this case a new button or choice ("new private mail") is made to the e-mail client program in addition to the existing ("new mail") button or choice. In this case YOP-server address could be placed automatically in the recipient field of the message and the recipient address(es) placed to the recipient field of the writing form could be placed to another suitable field of the message.

The invented method is simple to realize. Yet it is very effective and easy to use. With the assistance of a small plug-in program the office e-mail client program can be used for sending and receiving safely also private e-mails. All private e-mails sent and received can be automatically encrypted when in transit between the plug-in program and YOP-server. The risk of an unintentional violation of privacy of e-mail correspondence can be removed. Employee's private YOP-address is independent from the employer. There is no need to change the private e-mail address even if one takes a job with another employer, if the name of the employer changes or when the employee is retired. All one has to do is to update the user's office e-mail address or other address where he acquires e-mail service in the YOP-server database. Since no changes are required to the e-mail protocols private YOP-address is independent from the e-mail service used from time to time.

To the employer the invented method provides unlimited access to all work related e-mail correspondence at his disposal. The employer can also deliberate himself from restoring employees' private e-mail correspondence in his e-mail servers. Private mail may be saved in a separate password protected file e.g. in the employee's desktop computer. By safeguarding the privacy of employees' private e-mail correspondence the method reduces the risk of any unnecessary tension, conflict or legal proceedings that may be caused by such violation. The use of the method does not require any investments to machinery or software to be made by the employer.

The method can be applied for sending and/or receiving e-mails with different e-mail addresses to/from one e-mail client program in one e-mail system and for keeping such e-mails separate from other e-mal correspondence also for other purposes than for keeping private e-mails separate from work related e-mails as explained hereinabove. E.g. one may want to keep e-mail correspondence relating to certain responsibility, task, matter or work project separate form other e-mail correspondence. With the invented method one can easily open a separate e-mail address for e-mail correspondence relating to a particular responsibility, task, matter or project and keep all such correspondence separate from other e-mail correspondence.

The method can also be applied for sending and receiving e-mails under one e-mail address (collective e-mail address) with more than one e-mail client programs. Changes to the use of such collective e-mail address saved in the private address server can be easily carried out over the Internet.

## Claims

1. A method for keeping user's particular outgoing e-mail correspondence separate from user's other e-mail correspondence,
**characterized by** the steps of:
in a user's e-mail client program,
replacing (23) in a particular outgoing e-mail message a recipient address set by the user with the address of a remote mediating server,
placing (24) the recipient address set by the user into another field of the e-mail message,
sending (25) the e-mail message to the mediating server,
and in the mediating server
moving (29) in the e-mail message to be forwarded the recipient address from said another field into the recipient field, and
placing (28) a user address in the mediating server into the sender field of the e-mail message.

2. The method as in claim 1, **characterized in that**
when the user places a plurality of recipient addresses to the message all the recipient addresses are replaced with the address of the mediating server,
all the recipient addresses placed to the message by the user are moved into other field or fields of the message than any of the recipient fields.

3. The method as in claim 1, **characterized in that** replacing of the recipient address with the address of the mediating server and placing of the recipient address into antorher field are carried out automatically in response to the pressing by the user of a particular send button.

4. The as in claim 1, **characterized in that** replacing of the recipient address with the address of the mediating server and placing of the recipient address into antorher field are made automatically by means of a particular message writing form that contains the address of the mediating server not visible to the user.

5. A method for keeping user's particular incoming e-mail correspondence separate from user's other e-mail correspondence, in which a remote mediating server (13) receives an e-mail addressed to a user's particular address in the mediating server and retransmits the e-mail to an address specified by the user, **characterized by** the steps of:
in the mediating server
moving the original sender address in the e-mail received into other field than the address field,
replacing the address in the recipient field with another address specified by the user,
placing the address of the mediating server into the sender field,
retransmitting the e-mail to the address specified by the user, and
in the user's e-mail client program
receiving the e-mail
moving the original sender address from said other field into the sender field of the received e-mail message

6. The method as in claim 5, **characterized in that**
an identifier is added to a message retransmitted from the mediating server,
a message received by the user's e-mail client program is identified to be a particular message on the bases of the identifier.

7. The method as in claim 5, **characterized in that** when the user is one of the recipients of the e-mail message sent from the original sender address:
in the mediating server, the addresses of the other recipients of the message to be sent further from the mediating server are replaced to other field than the address field of the message,
in the user's e-mail client program, the addresses of the other recipients are extracted from said other field and shown to the user.

8. A system for keeping a user's particular e-mail correspondence separate from said user's other e-mail correspondence, comprising:
an e-mail client program in the user's computer for sending and receiving e-mails,
a remote mediating server (13) that retransmits e-mail messages received from the user to the message's recipient address and e-mail messages sent to a user's address in the mediating server to the user's e-mail address in an e-mail service that he is using , wherein prior to retransmission the mediating server (13) replaces an address in the reciepient address field in the message received with another address,
**characterized in that** the mediating server comprises:
the mediating server comprising :
a database containing the user's e-mail address in the e-mail service that he is using and the user's address in the mediating server,
**characterized in that** the mediating server comprises:
means for replacing the sender address in a message received from the user's e-mail client program with the user's address in the mediating server, and for replacing in said message the mediating server's address in the recipient address field with an address or addresses of original recipient(s) temporarily placed in another field or fields than recipient address field of the message.
means for replacing, in a message received by the mediating server, the user's address in the mediating server in the recipient address field with the user's address in the e-mail service that he is using and for moving the sender address in said message into another field of a message to be retransmitted,
and **in that** a plug-in program has been added to the e-mail client program, said plug-in program being adapted to:
replace, in a message to be sent from the client program, a recipient address set by the user in the recipient address field with the address of the mediating server,
move, in said message, the reciepint address set in the recipient address field of the message by the user into other field of the message than an address field, and
replace, in a message received by the client program, the sender address in the sender field with the original sender address placed in other field than the address field.

9. An e-mail mediating server (13) in a computer network e.g. in the Internet, comprising means for replacing an address in the reciepient address field in the message received with another address and for retransmitting the message to said another address,
a database containing users' e-mail addresses in e-mail services that they are using and the users' e-mail addresses in the mediating server,
**characterized in that** the mediating server comprises:
means for replacing the sender address in a message received from a user's e-mail client program with the user's e-mail address in the mediating server and for replacing in said message the address of the mediating server in the recipient address field with the address of a recipient/ recipients placed in another field than the address field,
means for replacing in a message received by the mediating server the user's address in the mediating server in the recipient field of said message with the user's e-mail address in the e-mail service he is using and for placing the sender address in the sender field to another field than an address field in the message to be retransmitted.

10. The e-mail mediating server as in claim 9, **characterized in that** it further comprises means for placing recipient addresses other than the user's address to another field of the message to be retransmitted so that the user's e-mail client program can then extract these other recipient addresses and show them to the user.

## Patentansprüche

1. Verfahren zur Aufbewahrung einer bestimmten ausgehenden Email-Korrespondenz des Benutzers separat von seiner anderen Email-Korrespondenz,
**gekennzeichnet durch** folgende Schritte:
im Email Client-Programm eines Benutzers,
Ersetzen (23) einer vom Benutzer in einer bestimmten ausgehenden Email-Nachricht eingestellten Empfängeradresse **durch** die Adresse eines entfernten Vermittlungsservers,
Platzieren (24) der vom Benutzer eingestellten Empfängeradresse in ein anderes Feld der Email-Nachricht,
Senden (25) der Email-Nachricht an den Vermittlungsserver,
und im Vermittlungsserver
Verschieben (29), in der weiterzuleitenden Email-Nachricht, der Empfängeradresse aus dem anderen Feld in das Empfängerfeld, und
Platzieren (28) einer Benutzeradresse im Vermittlungsserver in das Senderfeld der Email-Nachricht.

2. Verfahren nach Anspruch 1, **dadurch gekennzeichnet, dass** wenn der Benutzer eine Mehrzahl von Empfängeradressen in die Nachricht platziert, werden alle Empfängeradressen durch die Adresse des Vermittlungsservers ersetzt,
werden alle vom Benutzer in die Nachricht platzierten Empfängeradressen in ein anderes oder in andere Felder als eins der Empfängerfelder verschoben.

3. Verfahren nach Anspruch 1, **dadurch gekennzeichnet, dass** das Ersetzen der Empfängeradresse durch die Adresse des Vermittlungsservers und das Platzieren der Empfängeradresse in ein anderes Feld automatisch in Reaktion auf das Drücken einer bestimmten Sendetaste durch den Benutzer ausgeführt werden.

4. Verfahren nach Anspruch 1, **dadurch gekennzeichnet, dass** das Ersetzen der Empfängeradresse durch die Adresse des Vermittlungsservers und das Platzieren der Empfängeradresse in ein anderes Feld automatisch mittels eines bestimmten Nachrichten-Schreibformulars vorgenommen werden, welches die für den Benutzer nicht sichtbare Adresse des Vermittlungsservers enthält.

5. Verfahren zur Aufbewahrung einer bestimmten eingehenden Email-Korrespondenz des Benutzers separat von seiner anderen Email-Korrespondenz, wobei ein entfernter Vermittlungsserver (13) eine an eine bestimmte Benutzer-Adresse im Vermittlungsserver adressierte Email empfängt und die Email weiter an eine von einem Benutzer vorgegebene Adresse leitet,
**gekennzeichnet durch** folgende Schritte:
im Vermittlungsserver,
Verschieben der ursprünglichen Senderadresse in der empfangenen Email in ein anderes als das Adressfeld,
Ersetzen der Adresse im Empfängerfeld **durch** eine vom Benutzer vorgegebene andere Adresse,
Platzieren der Adresse des Vermittlungsservers in das Senderfeld,
Weiterleiten der Email an die vom Benutzer vorgegebene Adresse, und,
im Email Client-Programm des Benutzers,
Empfangen der Email,
Verschieben der ursprünglichen Senderadresse aus dem anderen Feld in das Senderfeld der empfangenen Email-Nachricht.

6. Verfahren nach Anspruch 5, **dadurch gekennzeichnet, dass** eine Kennung zu einer Nachricht hinzugefügt wird, die vom Vermittlungsserver weitergeleitet wird,
eine vom Email Client-Programm des Benutzers empfangene Nachricht als eine bestimmte Nachricht auf der Basis der Kennung identifiziert wird.

7. Verfahren nach Anspruch 5, **dadurch gekennzeichnet, dass**, wenn der Benutzer einer der Empfänger der von der ursprünglichen Senderadresse gesendeten Email-Nachricht ist:
im Vermittlungsserver die Adressen der anderen Empfänger der vom Vermittlungsserver weiterzuleitenden Nachricht in ein anderes Feld als das Adressfeld der Nachricht versetzt werden,
im Email Client-Programm des Benutzers die Adressen der anderen Empfänger aus dem anderen Feld entnommen und dem Benutzer angezeigt werden.

8. System zur Aufbewahrung einer bestimmten ausgehenden Email-Korrespondenz des Benutzers separat von seiner anderen Email-Korrespondenz, umfassend:
ein Email Client-Programm im Computer des Benutzers zum Senden und Empfangen von Emails,
einen entfernten Vermittlungsserver (13), der vom Benutzer an der Empfängeradresse empfangene Email-Nachrichten und an eine Benutzeradresse im Vermittlungsserver gesendete Email-Nachrichten an die Email-Adresse des Benutzers in einem von ihm benutzten Email-Dienst weiterleitet, wobei vor der Weiterleitung der Vermittlungsserver (13) eine Adresse im Empfängeradressfeld in der empfangenen Nachricht durch eine andere Adresse ersetzt,
wobei der Vermittlungsserver eine Datenbank umfasst, der die Email-Adresse des Benutzers in dem von ihm benutzten Email-Dienst und die Adresse des Benutzers im Vermittlungsserver enthält,
**dadurch gekennzeichnet, dass** der Vermittlungsserver umfasst:
Mittel zum Ersetzen der Senderadresse in einer vom Email Client-Programm des Benutzers empfangenen Adresse durch die Adresse des Benutzers im Vermittlungsserver und zum Ersetzen der Vermittlungsserver-Adresse im Empfängeradressfeld der Nachricht durch eine Adresse oder Adressen des/der ursprünglichen Empfänger, die temporär in ein anderes Feld oder andere Felder als das Empfänger-Adressfeld der Nachricht platziert wurden,
Mittel zum Ersetzen der Adresse des Benutzers im Vermittlungsserver im Empfängeradressfeld einer vom Vermittlungsserver empfangenen Nachricht durch die Adresse des Benutzers in dem von ihm benutzten Email-Dienst und zum Verschieben der Senderadresse in der Nachricht in ein anderes Feld einer weiterzuleitenden Nachricht,
und indem ein Plugin-Programm zum Email Client-Programm hinzugefügt wurde, welches Plugin-Programm wie folgt eingerichtet ist:
Ersetzen, in einer vom Client-Programm zu sendenden Nachricht, einer vom Benutzer im Empfängeradressfeld eingestellten Empfängeradresse durch die Adresse des Vermittlungsservers,
Verschieben der vom Benutzer im Empfängeradressfeld der Nachricht eingestellten Empfängeradresse in ein anderes Feld der Nachricht als ein Adressfeld, und
Ersetzen, in einer vom Client-Programm empfangenen Nachricht, der Senderadresse im Senderfeld durch die ursprüngliche Senderadresse, die in ein anderes als das Adressfeld platziert wurde.

9. Email-Vermittlungsserver (13) in einem Computer-Netzwerk, zum Beispiel im Internet, umfassend Mittel zum Ersetzen einer Adresse in einem Empfängeradressfeld durch eine andere Adresse und zum Weiterleiten der Nachricht an eine andere Adresse,
eine Datenbank, die Benutzer-Emailadressen in von den Benutzern benutzten Email-Diensten und die Benutzer-Emailadressen im Vermittlungsserver enthält,
**dadurch gekennzeichnet, dass** der Vermittlungsserver umfasst:
Mittel zum Ersetzen der Senderadresse in einer vom Email Client-Programm eines Benutzers empfangenen Nachricht durch die Emailadresse des Benutzers im Vermittlungsserver und zum Ersetzen der Adresse des Vermittlungsservers im Empfängeradressfeld der Nachricht durch die Adresse des/der Empfänger, die in ein anderes als das Adressfeld platziert wurden,
Mittel zum Ersetzen, in einer vom Vermittlungsserver empfangenen Nachricht, der Adresse des Benutzers im Vermittlungsserver im Empfängerfeld der Nachricht durch die Emailadresse des Benutzers in dem von ihm benutzten Email-Dienst und zum Platzieren der Senderadresse im Senderfeld in ein anderes als das Adressfeld in der weiterzuleitenden Nachricht.

10. Email-Vermittlungsserver nach Anspruch 9, **dadurch gekennzeichnet, dass** er ferner Mittel zum Platzieren der Empfängeradressen, außer der Benutzeradresse, in ein anderes Feld der weiterzuleitenden Nachricht umfasst, so dass das Email Client-Programm des Benutzers diese anderen Empfängeradressen entnehmen und sie dem Benutzer anzeigen kann.

## Revendications

1. Procédé pour garder la correspondance particulière d'e-mail sortant de l'utilisateur séparée des autres correspondances d'e-mail de l'utilisateur, **caractérisé par** les étapes consistant à :
dans un programme client d'e-mail de l'utilisateur,
remplacer (23) dans un message particulier d'e-mail sortant une adresse de destinataire définie par l'utilisateur par l'adresse d'un serveur de médiation distant,
placer (24) l'adresse de destinataire définie par l'utilisateur dans un autre champ du message d'e-mail,
envoyer (25) le message d'e-mail au serveur de médiation,
et dans le serveur de médiation
déplacer (29) dans le message d'e-mail à faire suivre l'adresse de destinataire dudit autre champ au champ de destinataire, et
placer (28) une adresse d'utilisateur dans le serveur de médiation dans le champ d'expéditeur du message d'e-mail.

2. Procédé selon la revendication **1, caractérisé en ce que**
lorsque l'utilisateur place une pluralité d'adresses de destinataire dans le message, toutes les adresses de destinataire sont remplacées par l'adresse du serveur de médiation,
toutes les adresses de destinataire placées dans le message par l'utilisateur sont déplacées dans un ou plusieurs champs du message autres que les champs de destinataire.

3. Procédé selon la revendication 1, **caractérisé en ce que** le remplacement de l'adresse de destinataire par l'adresse du serveur de médiation et le placement de l'adresse de destinataire dans un autre champ sont effectués automatiquement en réponse à la pression par l'utilisateur d'un bouton particulier d'envoi.

4. Procédé selon la revendication 1, **caractérisé en ce que** le remplacement de l'adresse de destinataire par l'adresse du serveur de médiation et le placement de l'adresse de destinataire dans un autre champ sont effectués automatiquement au moyen d'un formulaire de rédaction de message particulier qui contient l'adresse du serveur de médiation non visible par l'utilisateur.

5. Procédé pour garder la correspondance particulière d'e-mail entrant de l'utilisateur séparée des autres correspondances d'e-mail de l'utilisateur, dans lequel un serveur de médiation distant (13) reçoit un e-mail adressé à une adresse particulière de l'utilisateur dans le serveur de médiation et retransmet l'e-mail à une adresse spécifiée par l'utilisateur, **caractérisé par** les étapes consistant à :
dans le serveur de médiation
déplacer l'adresse de l'expéditeur d'origine dans l'e-mail
reçu dans un champ autre que le champ d'adresse,
remplacer l'adresse dans le champ de destinataire par une autre adresse spécifiée par l'utilisateur,
placer l'adresse du serveur de médiation dans le champ d'expéditeur,
retransmettre l'e-mail à l'adresse spécifiée par l'utilisateur, et
dans le programme client d'e-mail de l'utilisateur
recevoir l'e-mail,
déplacer l'adresse d'expéditeur d'origine dudit autre champ
dans le champ d'expéditeur du message d'e-mail reçu.

6. Procédé selon la revendication 5, **caractérisé en ce que**
un identifiant est ajouté à un message retransmis du serveur de médiation,
un message reçu par le programme client d'e-mail de l'utilisateur est identifié comme étant un message particulier sur la base de l'identifiant.

7. Procédé selon la revendication 5, **caractérisé en ce que** lorsque l'utilisateur est l'un des destinataires du message d'e-mail envoyé de l'adresse d'expéditeur d'origine :
dans le serveur de médiation, les adresses des autres destinataires du message à faire suivre du serveur de médiation sont remplacées dans le champ autre que le champ d'adresse du message,
dans le programme client d'e-mail de l'utilisateur, les adresses des autres destinataires sont extraites dudit autre champ et montrées à l'utilisateur.

8. Système pour garder la correspondance particulière d'e-mail d'un utilisateur séparée des autres correspondances d'e-mail dudit utilisateur, comprenant :
un programme client d'e-mail dans l'ordinateur de l'utilisateur pour envoyer et recevoir des e-mails,
un serveur de médiation distant (13) qui retransmet les messages d'e-mail reçus de l'utilisateur à l'adresse de destinataire du message et les messages d'e-mail envoyés à une adresse de l'utilisateur dans le serveur de médiation à l'adresse d'e-mail de l'utilisateur dans un service d'e-mail qu'il utilise, dans lequel, avant la retransmission, le serveur de médiation (13) remplace une adresse dans le champ d'adresse de destinataire du message reçu par une autre adresse,
le serveur de médiation comprenant une base de données contenant l'adresse e-mail de l'utilisateur dans le service d'e-mail qu'il utilise et l'adresse de l'utilisateur dans le serveur de médiation,
**caractérisé en ce que** le serveur de médiation comprend :
des moyens pour remplacer l'adresse d'expéditeur dans un message reçu du programme client d'e-mail de l'utilisateur par l'adresse e-mail de l'utilisateur dans le serveur de médiation, et pour remplacer dans ledit message l'adresse du serveur de médiation dans le champ d'adresse de destinataire par une ou plusieurs adresses du ou des destinataires d'origine provisoirement placées dans un ou plusieurs champs autres que le champ d'adresse de destinataire du message,
des moyens pour remplacer, dans un message reçu par le serveur de médiation, l'adresse de l'utilisateur dans le serveur de médiation dans le champ d'adresse de destinataire par l'adresse e-mail de l'utilisateur dans le service d'e-mail qu'il utilise et pour déplacer l'adresse d'expéditeur dans ledit message dans un autre champ d'un message à retransmettre,
et **en ce qu'**un programme d'extension est ajouté au programme client d'e-mail, ledit programme d'extension étant adapté pour :
remplacer, dans un message à envoyer du programme client, une adresse de destinataire définie par l'utilisateur dans le champ d'adresse de destinataire par l'adresse du serveur de médiation,
déplacer, dans ledit message, l'adresse de destinataire définie dans le champ d'adresse du destinataire du message par l'utilisateur dans un champ du message autre qu'un champ d'adresse, et
remplacer, dans un message reçu par le programme client, l'adresse de l'expéditeur dans le champ d'expéditeur par l'adresse d'expéditeur d'origine dans le champ autre que le champ d'adresse.

9. Serveur de médiation d'e-mail (13) dans un réseau d'ordinateurs, par exemple Internet, comprenant des moyens pour remplacer une adresse dans le champ d'adresse de destinataire dans le message reçu par une autre adresse et pour retransmettre le message à ladite autre adresse,
une base de données contenant des adresses e-mail d'utilisateurs dans des services d'e-mail qu'ils utilisent et les adresses e-mail des utilisateurs dans le serveur de médiation,
**caractérisé en ce que** le serveur de médiation comprend:
des moyens pour remplacer l'adresse d'expéditeur dans un message reçu du programme client d'e-mail de l'utilisateur par l'adresse e-mail de l'utilisateur dans le serveur de médiation, et pour remplacer dans ledit message l'adresse du serveur de médiation dans le champ d'adresse de destinataire par l'adresse d'un ou plusieurs destinataires placée dans un champ autre que le champ d'adresse,
des moyens pour remplacer, dans un message reçu par le serveur de médiation, l'adresse de l'utilisateur dans le serveur de médiation dans le champ de destinataire dudit message par l'adresse e-mail de l'utilisateur dans le service d'e-mail qu'il utilise et pour placer l'adresse d'expéditeur dans le champ d'expéditeur dans un champ autre qu'un champ d'adresse dans le message à retransmettre.

10. Serveur de médiation d'e-mail selon la revendication 9, **caractérisé en ce qu'**il comprend en outre des moyens pour placer des adresses de destinataire autre que l'adresse de l'utilisateur dans un autre champ du message à retransmettre de manière à ce que le programme client d'e-mail de l'utilisateur puisse ensuite extraire ces autres adresses de destinataire et les montrer à l'utilisateur.
